# EUROPEAN PATENT SPECIFICATION

(11) **EP 3 247 811 B1**
(45) Date of publication and mention of the grant of the patent: **19.06.2019**
(21) Application number: 16712454.4
(22) Date of filing: 21.01.2016
(51) Int. Cl.: C21B 3/08, C21B 3/10, C04B 5/00, C22B 7/04

(54) **PLANT FOR RECYCLING OF WHITE SLAG GENERATED DURING A STEEL PRODUCTION STEP**
ANLAGE ZUR WIEDERVERWERTUNG VON WÄHREND EINES STAHLERZEUGUNGSSCHRITTES ERZEUGTER WEISSER SCHLACKE
INSTALLATION POUR LE RECYCLAGE DE SCORIES BLANCHES GÉNÉRÉES AU COURS D'UNE ÉTAPE DE PRODUCTION D'ACIER

(30) Priority: 21.01.2015 IT BO20150019
(43) Date of publication of application: 29.11.2017
(73) Proprietor: Material Handling Technology S.p.A., 30172 Venezia Mestre (IT)
(72) Inventor: BUIZZA, Dario, 25035 Ospitaletto (BS) (IT)
(74) Representative: Dall'Olio, Christian
(86) International application number: PCT/IB2016/050291
(87) International publication number: WO 2016/116884

(56) References cited:
- EP-A1- 2 228 458
- EP-A1- 2 261 383
- DE-A1- 19 645 254
- GB-A- 457 707
- US-A- 4 147 332

## Description

### FIELD OF THE INVENTION

The present invention relates to the technical sector concerning production of steel.

In more detail, it relates to a plant for recycling of white slag generated during the steel production step.

### DESCRIPTION OF THE PRIOR ART

It is known that the main wastes generated during steel production substantially comprise the smoke-abating powders, the spent refractory materials and slag in general.

Up to the present time the biggest problem is the one relating to the recycling and/or elimination of the "white slag", deriving from refining processes.

White slag is very rich in calcium and liable to recycling, though its tendency to hydrate and the processes of withering make it a very unstable material.

This leads to significant problems in the management of a storage in the open of the material and the prevention of its dispersion in the environment.

The recycling of white slag would enable two important advantages to be achieved:
- reduction of the use of raw materials such as alkaline deslaggers;
- reduction of eliminated discharge, to the advantage of the ecological/environmental aspect.

This is of fundamental importance when considering the fact that white slag constitutes over 90% of the waste sub-products potentially recyclable in a steelworks.

The main compound of white slag is dicalcium silicate, the molecule of which is characterised by a crystalline structure that varies according to temperature.

During the cooling process of the white slag, at temperatures of lower than about 500°C the dicalcium silicate is subjected to phase transitions which lead to an increase in volume which, due to the different crystalline structure and density, gives rise to a fragmentation of the matrix, known as "withering".

The "controlled" reduction of the temperature of the white slag in a "protected" environment thus enables a recycling thereof, generating a powder rich in calcium which can be newly used in the furnace or in other and various applications.

A first method is known for recycling the white slag which is based on the withering process described in the foregoing, performing a cooling of the material of the "static" type.

White slag is left to cool resting on grids, internally of suitable chambers, up to its pulverisation.

The grids enable passage of the powder obtained into the underlying hoppers, where the powder is struck by a flow of air that facilitates cooling of the material.

The method presents a series of problems and drawbacks, such as poor heat exchange efficiency and consequently long times for realising the pulverisation of the material, and a further slowing-down of the transformation kinetics due to the accumulation of powders on the upper part of the material which act as an insulating layer.

Documents JP 52.13493 and JP 52.17388 describe a second method for recuperating the white slag which is also based on the withering process, where there is an open tubular reactor in which the white slag is inserted.

In this case the cooling of the white slag is obtained indirectly by cooling the external; surface of the reactor using water sprayed onto the upper part of the reactor and collected in an appropriate tub located inferiorly of the reactor.

The greatest problems encountered in this case are represented by the dispersion and the high water consumption, the poor heat exchange concentrated in only the high part of the reactor leading to large reactor dimensions, as well as the possibility of wetting the material with an ensuing qualitative deterioration thereof.

Document EP 2.261.383 A1 describes a third method for recuperating the white slag in which an open tubular reactor is used in which the white slag is inserted so as to be withered.

The cooling system of the white slag mainly includes an air flow which involves the internal region of the rotating drum and cools the white slag contained therein by direct heat exchange.

Owing to the moisture present in the cooling air flow, the free calcium and any free magnesium present in the white slag are hydrated, slowing down the withering process and generating a qualitatively worse product, due to the greater energy required for successive dissociation thereof in the furnace.

The use of large volumes of air for direct cooling of the white slag must necessarily include the use of a downstream filter system of large dimensions, with a higher outlay in terms of plant and money.

In document EP 2.261.383 A1 the cooling system can comprise, apart from the air flow involving the internal region of the rotating drum, also a series of nozzles positioned below the rotating drum able to spray water against the external surface of a portion of the drum, and a collecting tub of the sprayed water (paragraph 35).

In embodiments thereof that are not described and illustrated, the cooling system can further be an integral part of the rotating drum and can consist of a series of cooling plates fixed internally of the rotating drum.

Conduits are realised internally of the plates for circulation of a cooling fluid which can then be sent to exchangers for dissipating the exchanged heat (paragraph 36).

The realising of cooling plates fixed internally of the rotating drum and of a complex system of conduits for circulation of the cooling fluid, apart from providing a smaller exchange surface, leads to an evident greater plant complexity and higher costs, which is to be added to the air-flow plant which involves the internal region of the rotating drum.

Document EP 2.261.383 A1 describes a batch process in which the tubular reactor must be cyclically loaded with the white slag and cyclically cleaned of the residual metal crusts which might damage the reactor during rotation thereof.

Consequently, during the loading the tubular reactor might receive in inlet both white slag at too-high temperatures and blocks of large dimensions which might damage the reactor and its structures.

In a similar way, any non-pulverised metal encrustation in the withering process remain in permanent rotation internally of the rotating drum and are manually removed only after a predetermined number of cycles (paragraph 40, lines 44-49); this causes compacting of the powder (which is therefore not recycled) and the consequent creation of "crusts" of material, strongly limiting the transformation performance and the recycling.

### SUMMARY OF THE INVENTION

The aim of the present invention is to obviate the problems of the prior art, by disclosing a plant for recycling the white slag which is generated in the steel production step, able to reduce the times and costs of production, while at the same time maintaining high qualitative standards of the obtained material and of the safety for the operators and the equipment.

A further aim of the present invention is to disclose a plant for recycling the white slag which is generated during the steel production step, able to maximise the heat exchange during the cooling step of the white slag, enabling reduction of the dimensions of the plant and optimising the performances of the transformation and recycling of the white slag.

A further aim of the present invention is to disclose a plant for recycling the white slag which is generated during the steel production step, able to maximise the heat exchange during the cooling step of the white slag, enabling a limiting of the quantity of cooling fluid necessary, avoiding dispersion thereof and therefore any polluting of the white slag.

A further aim of the present invention is to disclose a plant for recycling the white slag which is generated during the steel production step, able to treat the white slag, in the various and possible physical conditions in which it can be - in the solid state, semi-solid paste state, or in the liquid state, according to needs and requirements, with a continuous-cycle functioning mode.

The aims are attained by means of a plant for recuperating the white slag which is generated during the steel production step, made according to claim 1.

In particular embodiments the plant for recycling the white slag generated during the steel production step comprises one or more of the following characteristics, considered singly or in combination.
- the space advantageously comprises a channel which winds in a helix in the mantle of the first portion of the rotating cylinder, so as to maximise the indirect heat exchange between the cooling fluid and the white slag;
- the internal surface of the first portion of the rotating cylinder is shaped in a toothed profile which enables increasing the heat exchange surface between the cooling fluid and the white slag, the toothed profile defining a series of fins;
- the storage means of the white slag comprise: a hopper peripherally provided with a space involved by a cooling fluid, so as to enable a first cooling of the white slag before entry thereof into the first portion of the rotating cylinder; an overflow, positioned superiorly of the hopper, frontally of the loading zone of the white slag, provided for separating the white slag from the liquid metal still possibly present; the overflow having, on a side thereof facing the hopper, a containing head which enables retaining the liquid metal in the overflow, and facilitating passage of the white slag, which floats on the liquid metal due to the considerable difference in the specific weight difference there-between, towards the underlying hopper.
- the overflow is removable with respect to the hopper;
- the storage means of the white slag comprise; a grid positioned in proximity of the inlet mouth of the hopper, able to retain portions of white slag and possible metal residues having a grain size that is greater than a predetermined grain size; means for unloading to the outside from the hopper of those portions of white slag and metal residues retained by the grid;
- the grid is positioned inclined in such a way as to facilitate unloading towards the outside of the hopper of the portions of white slag and metal residues resting on the grid;
- the unloading means comprise an actuator able to activate rotation of the grid in order to facilitate unloading towards the outside of the hopper of the portions of white slag and metal residues resting on the grid;
- means can be provided that are able to subject the grid to a vibrational motion;
- the grid comprises a space containing a cooling fluid, so as to enable a first cooling of the white slag prior to inlet thereof into the first portion of the rotating cylinder;
- the feeding means of the white slag to the first portion of the rotating cylinder comprise a conveyor subject to means for cooling which enable a second preliminary cooling of the white slag prior to inlet thereof into the first portion of the rotating cylinder.

### BRIEF DESCRIPTION OF THE DRAWINGS

The technical characteristics.of the invention will be set out in the following, in which some preferred embodiments are described, non-exclusively, with reference to the appended tables of drawings, in which:
- figure 1 schematically illustrates a lateral view of the disclosed plant for recycling of white slag;
- figure 1A is a like lateral view of the plant denoted in figure 1 in a variant realisation;
- figure 2 is a general diagram of the plant in which the plant illustrated in figures 1, 1A can operate;
- figure 3 is a view along sections A-A indicated in figures 1, 1A;
- figure 4 is a view along sections B-B indicated in figures 1, 1A;
- figure 5 is a larger-scale view of detail W3 of the plant illustrated in figure 1A;
- figure 5A is a view along line C of the detail illustrated in figure 5;
- figure 6 is a larger-scale view of a plan view of detail W1 illustrated in figure 1;
- figure 7 is a larger-scale view of detail W2 illustrated in figure 1.

### DESCRIPTION OF THE PREFERRED EMBODIMENTS

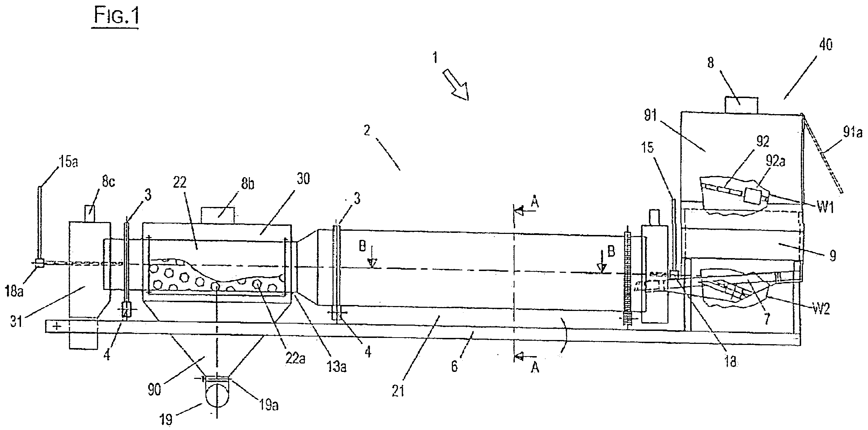

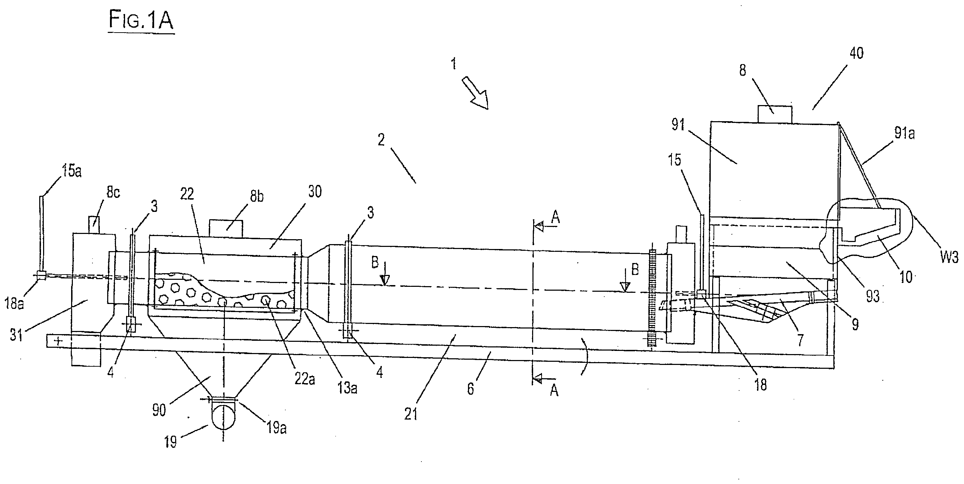

With reference to the tables of drawings, reference numeral 1 denotes in its entirety the disclosed plant for recycling of white slag generated during a steel production step (figures 1, 1A).

The recycling of the white slag which is generated during the steel production step innovatively comprises following steps:
- storage of the white slag in storage means;
- regulatable-flow feeding of the white slag by the storage means internally of a controlled-atmosphere rotating cylinder;
- controlled cooling of the white slag contained internally of the rotating cylinder by means of indirect heat exchange with a cooling fluid located in a space afforded in a mantle of the rotating cylinder; the controlled cooling leading to a withering process of the white slag with a consequent detachment of fragments and powders;
- selecting and separating the fragments and powders of white slag having an average grain size of smaller than a predetermined grain size, with a consequent extraction from the rotating cylinder;
- unloading from the rotating cylinder of the fragments and powders of white slag having a grain size that is greater than the predetermined grain size;
the selecting and separating step and the unloading step being carried out in a continuous cycle with the rotation of the rotating cylinder.

During the controlled cooling step the white slag is advantageously subjected to continuous mixing and overturning steps for facilitating the indirect heat exchange with the cooling fluid and the detachment of fragments and powders.

The main steps can be observed with reference to the plant illustrated in figures 1, 1A.

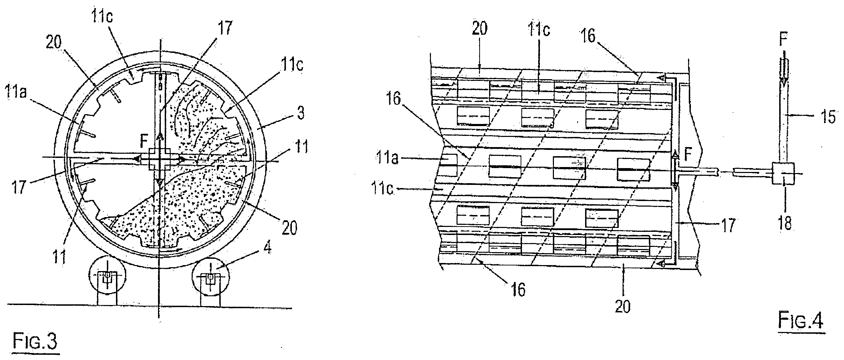

During the controlled cooling step of the white slag the cooling fluid can contain a channel fashioned in the mantle of the rotating cylinder which preferably winds in a helix (figures 3, 4).

During the storing step of the white slag a first preliminary cooling of the white slag can be carried out, before conveying thereof internally of the rotating cylinder.

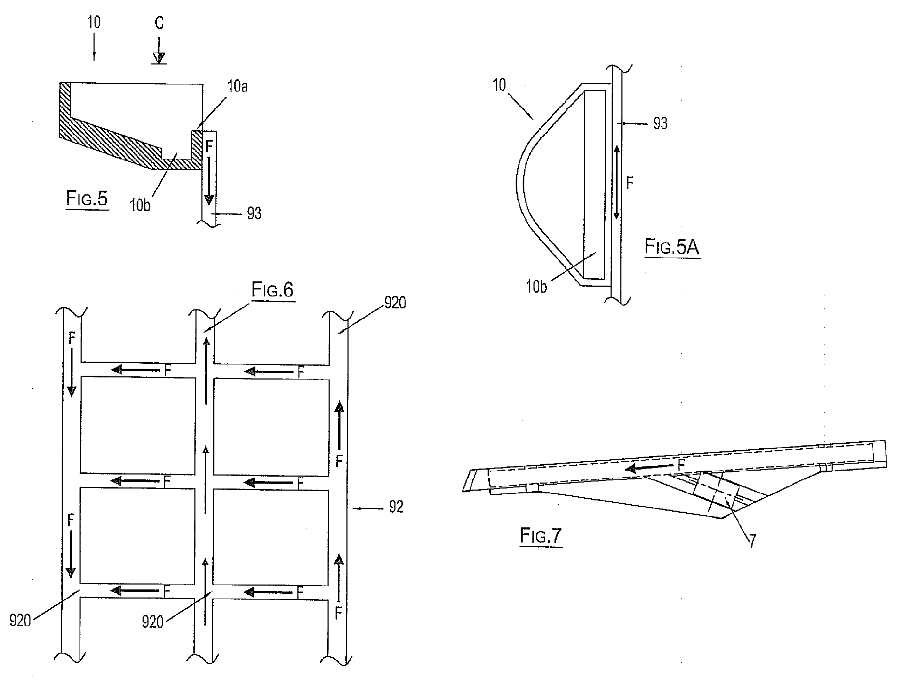

During the flow-regulatable feeding step of the white slag a second preliminary cooling of the white slag can be carried out, before conveying thereof internally of the rotating cylinder (figure 7).

According to the specifications, following the step of selecting and separating, the following steps can be included in succession:
- magnetic separation of metal materials contained in the fragments and powders of the white slag;
- dimensional control by sieving of the fragments and powders of the white slag freed of the metal materials;
- possible calibrated mixing of the fragments and powders of the white slag subjected to selection and separation with spent ground refractory materials.
- storage of the mixture obtained.

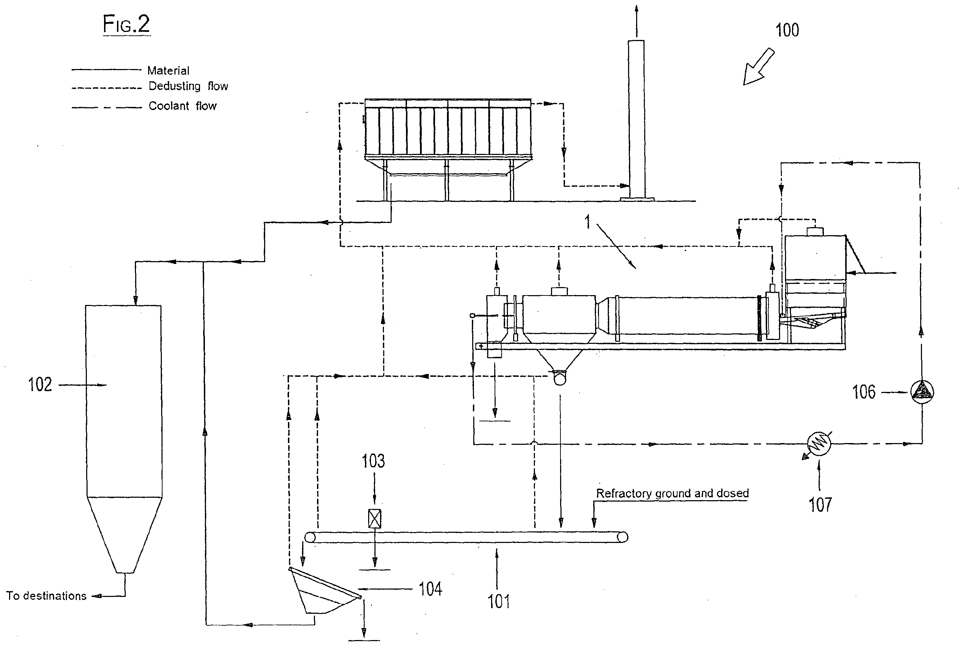

The supplementary steps can be observed simply with reference to the plant illustrated in figure 2.

Figures 1 and 1A illustrate lateral views of the disclosed plant 1 for recycling white slag in two embodiments which differ substantially only in the storage means of the white slag, according to whether it is in solid form and/or semi-solid-paste form (figure 1) or even in liquid form (figure 1A).

With reference to these figures the plant 1 of the invention for recycling white slag which is generated during the steel production step comprises, in a known way:
- storage means 40 of the white slag;
- a rotating cylinder 2 internally of which the white slag is housed in a controlled atmosphere; the rotating cylinder 2 comprising a first portion 21 in which a controlled cooling is carried out so as to lead to a withering process of the white slag, with a consequent detachment of fragments and powders, and a second portion 22, located in cascade from the first portion 21, in which the selection and the separation takes place of the fragments and powders of the white slag having a smaller grain size than a predetermined grain size;
- feeding means 7 of the white slag from the storage means to the first portion 21 of the rotating cylinder 2;
- first means 90, 19, 19a associated to the second portion 22 of the rotating cylinder 2, for extraction of the fragments and powders of the white slag having a grain size that is on average smaller than a predetermined size;
- second means 31, located in cascade to the second portion 22 of the rotating cylinder 2, for extraction of the fragments and powders of the white slag having a grain size that is on average smaller than a predetermined size.

In an entirely novel way, the plant comprises:
- a space 20 afforded in the mantle of the first portion 21 of the rotating cylinder 2;
- a cooling fluid F contained internally of the space 20 for enabling an indirect cooling of the white slag contained internally of the first portion 21 of the rotating cylinder 2;
- means for feeding the cooling fluid F into the space 20 in a closed circuit.

In an equally novel way, the first means 90, 19, 19a and the second means 31 enable extraction of the fragments and powders of the white slag in a continuous cycle with the rotation of the rotating cylinder 2.

The space (20) advantageously comprises a channel 16 which winds in a helix in the mantle of the first portion 21 of the rotating cylinder 2, so as to maximise the indirect heat exchange between the cooling fluid F and the white slag (figures 3, 4).

The internal surface of the first portion 21 of the rotating cylinder 2 is advantageously shaped in a toothed profile which enables increasing the heat exchange surface between the cooling fluid F and the white slag, the toothed profile defining a series of fins 11c dimensioned according to the energy requirements of the process.

The internal surface of the first portion 21 is preferably profiled transversally according to a toothed profile which defines a plurality of fins 11c arranged longitudinally (figures 3, 4).

With reference to figures 1, 1A, 2, 3 and 4 the cooling fluid F supply means comprise: fixed delivery pipes 15 and discharge pipes 15a connected to respective rotating joints, being a first joint 18 and a second joint 18a, which are connected to corresponding delivery and discharge pipes 17 comprised in the first portion 21 of the rotating cylinder 2 and able to feed and discharge the cooling fluid F to and from the space 20; pumping means 106 enabling circulation of the cooling fluid F through the space 20, the radial delivery and discharge pipes 17, the fixed delivery pipes 15 and discharge pipes 15a; means 107 for cooling the cooling fluid F in outlet from the fixed discharge pipe 15a.

The hopper 9, loaded with the white slag still hot, is protected by a grid 92 which prevents inlet into the plant of material having such dimensions as to cause damage to the rotating cylinder 2.

In more detail, the grid 92 is positioned in proximity of the inlet mouth of the hopper 9 and is able to retain portions of white slag and possible metal residues having a grain size that is greater than a predetermined grain size.

The grid 92 is positioned inclined in such a way as to facilitate unloading towards the outside of the hopper 9 of the portions of white slag and metal residues resting on the grid 92;

Means can be comprised for unloading to the outside from the hopper 9 of those portions of white slag and metal residues retained by the grid 92, so as to enable cleaning the grid 92.

The unloading means can comprise an actuator able to activate rotation of the grid 92 in order to facilitate unloading towards the outside of the hopper 9 of the portions of white slag and metal residues resting on the grid 92.

Means 92a can be provided that are able to subject the grid to a vibrational motion.

In a preferred embodiment, the grid 92 can comprises a space 920 involved by a cooling fluid F, so as to enable a first preliminary cooling of the white slag prior to inlet thereof into the first portion 21 of the rotating cylinder 2 (figure 6).

The loading hopper 9 is protected by a sheet metal hood 91 provided with an aspirating mouth 8 which prevents escape of dust, frontally provided with a door 91a that opens during the loading steps.

With reference to figures 1A, 5 and 5A, should it be desired to treat the white slag still in the liquid phase, the storage means 40 comprise:
- a hopper 9 peripherally provided with a space 93 containing a cooling fluid F, so as to enable a first cooling of the white slag prior to inlet thereof into the first portion 21 of the rotating cylinder 2;
- an overflow 10, positioned superiorly of the hopper 9, frontally of the feeding zone of the white slag, provided for separating the white slag from any liquid metal still possibly present;
the overflow 10 having, on a side thereof facing the hopper 9, a containing head 10a which enables retaining the liquid metal in the bottom zone 10b of the overflow 10, and facilitating passage of only the white slag, which floats on the liquid metal due to the specific weight difference there-between, towards the underlying hopper 9.

The overflow 10 can advantageously be removable from the loading hopper 9.

Alternatively or in combination the hopper 9 can also internally comprise further cooling means for the first cooling of the white slag.

No liquid steel is loaded in the hopper 9 which by solidifying internally of the rotating cylinder might create significant plant problems (blockages, lifting blade breakage).

By exploiting the considerable difference in density between slag and liquid metal, separation can be made between the two compounds as the steel remains on the bottom 10b of the overflow 10 while the white slag, which is lighter, by "floating" on the steel passes beyond the containing shutter 10a and enters the hopper 9.

The plant of the invention enables treating the white slag in any physical form in which it presents, with different loading modalities.

In particular, in the case of the liquid form, the white slag is directly supplied by the ladle into the overflow 10 in order to realise first the metal-slag separation and then a first cooling by action of the space 93 of the hopper 9 cooled by the cooling fluid F.

In the case of a solid form, the white slag is directly fed onto the grid 92, the combined cooling and vibrational action of which start the withering of the white slag, with the powder being collected on the bottom of the hopper 9.

In the case of a partial solidification on the ground, the white slag is directly fed onto the grid 92, which retains the large pieces, including metal pieces, and allows the powder to fall on the bottom of the hopper 9.

The first and second portions 21 and 22 of the rotating cylinder 2 constitute a single rigid body, preferably assembled by means of bolted flanges and supported by one or more rings 3 which rotate on rest and support rollers 4.

The rotating cylinder 2 is supported by support beams 6 which can advantageously be hinged on the unloading side so as to enable raising the loading side, and consequently the inclination of the axis of the rotating cylinder 2.

The change in inclination and rotation velocity of the rotating cylinder 2 determine the time the material remains inside the cylinder 2.

The feeding of the slag to the rotating cylinder 2 is done through the appropriate vibrating channel 7 or another known system, which enables regulating the flow of the material.

The vibrating channel 7 might include a cooling system with cooling fluid F, especially in a case of management of liquid slag.

In this case a second preliminary cooling of the white slag is carried out prior to inlet thereof into the first portion 21 of the rotating cylinder 2;
The first portion 21 is internally provided with a series of blades 11 able to subject the white slag to continuous mixing steps, facilitating both the heat exchange with the cooling fluid F and the detachment of fragments and powders from the white slag.

Attachment plates 11a can advantageously be provided, which enable easy replacement of the blades 11 (figure 4).

The rotation of the first portion 21 of the cylinder 2 and the presence of blades 11 enable a controlled acceleration of the withering process of the white slag; the continuous and periodic tipping of the material further facilitates detachment and the separation of the powder that has already withered from the material still under treatment and enables a continuous renewal of the slag in contact with the surface cooled by the cooling fluid F.

At the outlet of the first portion 21 of the rotating cylinder 2, the slag that has already withered enters the second portion 22 which, as it is a true and proper rotary sieve, with the jacket provided with a plurality of holes 22a, enables separation of the powder from the rest of the non-withered material by unloading it with a continuous cycle into the underlying collecting hopper 90.

The second portion 22 of the rotating cylinder 2 is inserted in a first protection chamber 30 for containing the powders, which second portion 22 is superiorly provided with an aspirating mouth 8b and is inferiorly connected to a hopper 90 for powder collection.

The hopper 90 is connected to an extraction system 19, of a vibrating or screw channel, which unloads the powder so as to send it to the successive cycle of selection and purification.

A blade shutter 19a or like systems separate the hopper 90 from the extraction system 19.

The non-withered material, and therefore not pulverised (essentially encrustations of residual metals), having greater dimensions than the hole 22a of the second portion 22, will proceed along the cylinder 2, the mantle of which externally of the first chamber 30 is continuous and lacking in holes, so as to enable unloading to the outside with a continuous cycle.

In order to avoid loss of powder the unloading of the non-withered material to the outside happens via a second protection chamber 31 provided with an aspirating mouth 8c.

With reference to figure 2, a general plant 100 diagram is illustrated for recuperating and recycling the white slag and possibly other sub-products of the steel production process.

The plant 100 comprises, according to potentiality, one or more modular plants 1, together with a ribbon conveyor belt 101 which collects the powders from the various modular plants 1 and stores them after having subjected them to the final treatment cycle.

The material collected by the conveyor belt 101 and coming from the single modular plants 1 is conveyed to a collection silo 102 after having undergone iron removing 103 and sieving 104.

The belt 101 can also possibly also collect the recuperation refractories, appropriately batched, for mixing them with the withered white slag.

Figure 2 also illustrates the cooling fluid circuit which comprises the fixed delivery and unloading pipes associated to the first portion 21 of the rotating cylinder 2, the pump 106, the cooler 107 and all the apparatus system (pressure gauges, filters, valves, etc.).

From the foregoing it is clear how the disclosed plant for recycling white slag generated during the steel production step is not only flexible but is able to reduce the times and costs of production, while at the same time maintaining high qualitative and quantitative standards of the obtained material and of the safety for the operators.

The plant is able to treat the white slag and to maximise the heat exchange during the cooling step of the white slag, enabling reduction of the dimensions of the plant and optimising the performance the recycling performance of the powder.

This is owing to the forced circulation of the cooling fluid internally of the space afforded in the mantle of the first portion of the rotating cylinder, which enables exploiting the whole external and internal surface of the first portion, the internal surface preferably being enhanced by the inclusion of internal finning.

To this can be added the preliminary cooling contributions that might be provided by the protection grid of the hopper, by the hopper itself and by the feeding means to the rotating cylinder.

Consequently strong limitations to the quantity of cooling liquid required are obtained, with large reductions, if not total annulment, of the dispersions and evaporations of liquid.

In document EP 2.261.383 A1, on the contrary, the primary cooling system of the slag is based on the use of an air flow which performs a direct heat exchange with the white slag present internally of the cylinder, with consequent hydration processes of the white slag which slow down the withering and penalise the quality of the material recuperated.

To this can be added the presence of a series of cooling nozzles positioned only below the rotating drum, thus limiting the exchange surface, which nozzles spray water against the external surface of the rotating drum, with a significant evaporation and dispersion of the liquid.

The possible presence of cooling plates fixed internally of the rotating drum will in any case provide, apart from the constructional complication and the relative costs, a heat exchange surface that is extremely limited in the face of the needs.

With reference to document EP 2.261.383 A1, concerning the cooling system, the plant of the invention enable drastically reducing the white slag treatment times, improving its quality (absence of hydration) and containing the volumes, by virtue of an improved and better heat exchange with the white slag..

In document EP 2.261.383 A1 the step of loading is cyclic and not continuous and the rotating cylinder, differently to the plant of the present invention, has no protection from a possible entry of white slag at too-high temperatures (including in the liquid phase) or blocks of large dimensions which might damage the cylinder and its structures.

During the loading step no stages and/or preliminary cooling apparatus are included for facilitating the process of withering of the slag subsequently fed to the rotating cylinder.

In document EP 2.261.383 A1, the unloading step is also cyclic and not continuous in the rotating cylinder, differently to plant of the present invention, and non-pulverised metal crusts can remain for a long time and possibly cause compacting of the powder (which is then not recuperated) and the consequent creation of "crusts" of material, which strongly limit the performance of transformation and recuperation, apart from damaging the rotating cylinder and its accessory apparatus.

With reference to document EP 2.261.383 A1, in regard to the modes of loading and unloading, the plant of the present invention enables significantly reducing the possibility of damaging the rotating cylinder, by preventing entry of the white slag when too hot or having too-large dimensions, and strongly limiting the time residual metal encrustations remain internally of the rotating cylinder, as they are unloaded in a continuous cycle and removed from the rotating cylinder.

The plant of the invention is further able to treat the white slag in any type and physical form it arrives in (solid, semi-solid, pasty and liquid), according to requirements, differently to document EP 2.261.383 A1.

The disclosed plant enables considerably increasing the kinetics of the recycling process of the white slag, by reducing the overall treatment times due to the special characteristics thereof and the continuous-recuperation functioning mode.

This continuous functioning mode, with all the process parameters easily manageable, has notable advantages with respect to intermittent slag-feeding systems (known as "batch" systems).

The high kinetics of the process are guaranteed by the large heat-exchange surfaces, enabled by the realising of a continuous space afforded in the external mantle of the first portion of rotating cylinder and by the high heat-exchange coefficients facilitated by the turbulent motion of the cooling fluid which flows through the channel that helically envelops around the external mantle.

Consequently the overall size of the plant is reduced without any risk of degradation of the material due to the presence of moisture and carbon dioxide, generally associated to the air flows used in plants of known type.

Internally of the first portion of the rotating cylinder the white slag is continually moved and tipped over, thus being continuously renewed in contact with the exchange surface and facilitating the immediate detaching and separation of the powder produced by the rest of the material, with the advantage that cooling is rapid and complete for the whole of the slag to be treated.

The special conformation of the space which develops through a helically-enveloping channel is aimed at obtaining a turbulent motion of the cooling fluid, in order to maximise the heat exchange.

The controlled atmosphere internally of the rotating cylinder minimises the possibility of hydrating and carbonating the slag, preventing qualitative degradation thereof, differently to the prior art.

The plant of the invention uses, as a cooling fluid, a closed-circuit fluid, for example industrial water, and the service filter plant will manage only the step of depulverisation, and will be of a smaller size.

This plant enables easy management of the main parameters of the recuperation process: time, temperature and slag flow.

The treatment time is modified by acting independently on the rotation velocity and the degree of inclination of the rotating cylinder.

The final unloading temperature of the withered slag is established independently on the basis of the cooling water flow rate and the infeed temperature thereof.

The batching of the material to the rotating cylinder is controlled by means of the velocity of the vibrating loading channel downstream of the loading hopper.

The plant of the invention for recycling the white slag enables achieving the following advantages:
- considerable reduction of consumption of deslaggers (replaced by the recycled white slag) and of materials to be eliminated in discharge;
- possibility of having a known deslagging material available for the desired uses;
- recycling of the steel still contained in the white slag and the spent refractories.

These advantages lead to an improvement in the smelting process and an important reduction in steel production costs without involving modifications to the operativity of the furnace and analytical variations of the steel produced.

The recycling of the white slag to the smelting furnace enables recycling all the free calcium and magnesium contained therein without penalising the energy performance and without influencing tap to tap times.

In this way, by an accelerated withering process of the white slag and a grinding of the refractory materials, a calibrated material containing dolomite and calcium can be obtained, rich in alkaline oxides and poor in toxic elements.

This mixture advantageously enables replacement of part of the deslagging material added to the production process (a smelter and/or a ladle furnace).

## Claims

1. A plant for recycling of white slag which is generated during a steel production step, comprising:
- a rotating cylinder (2) internally of which the white slag is housed in a controlled atmosphere; the rotating cylinder (2) comprising a first portion (21) in which a controlled cooling is carried out so as to lead to a withering process of the white slag, with a consequent detachment of fragments and powders, and a second portion (22), located in cascade from the first portion (21), in which the selection and the separation takes place of the fragments and powders of the white slag having a smaller grain size than a predetermined grain size;
- first means (90, 19, 19a) associated to the second portion (22) of the rotating cylinder (2), for extraction of the fragments and powders of the white slag having a grain size that is on average smaller than a predetermined size;
- second means (31), located in cascade to the second portion (22) of the rotating cylinder (2), for extraction of the fragments and powders of the white slag having a grain size that is on average higher than a predetermined size,
- a space (20) afforded in the mantle of the first portion (21) of the rotating cylinder (2);
- a cooling fluid (F) contained internally of the space (20) for enabling an indirect cooling of the white slag contained internally of the first portion (21) of the rotating cylinder (2);
- means for feeding the cooling fluid (F) into the space (20) in a closed circuit;
the plant (1) being **characterized in that** it comprises:
storage means (40) of the white slag;
feeding means (7) of the white slag from the storage means to the first portion (21) of the rotating cylinder (2);
wherein the first means (90, 19, 19a) and the second means (31) enable extraction of the fragments and powders of the white slag in a continuous cycle with the rotation of the rotating cylinder (2),
and **in that** the storage means (40) of the white slag comprise:
- a hopper (9) peripherally provided with a space (93) containing a cooling fluid (F), so as to enable a first cooling of the white slag prior to inlet thereof into the first portion (21) of the rotating cylinder (2);
- an overflow (10), positioned superiorly of the hopper (9), frontally of the feeding zone of the white slag, provided for separating the white slag from any liquid metal still possibly present;
the overflow (10) having, on a side thereof facing the hopper (9), a containing head (10a) which enables retaining the liquid metal in the overflow (10), and facilitating passage of the white slag, which floats on the liquid metal due to the specific weight difference there-between, towards the underlying hopper (9).

2. The plant of claim 1, **characterised in that** the space (20) through which the cooling fluid (F) passes comprises a channel (16) which winds in a helix in the mantle of the first portion (21) of the rotating cylinder (2), so as to maximise the indirect heat exchange between the cooling fluid (F) and the white slag.

3. The plant of claim 1 or 2, **characterised in that** the internal surface of the first portion (21) of the rotating cylinder (2) is shaped in a toothed profile which enables increasing the heat exchange surface between the cooling fluid (F) and the white slag, the toothed profile defining a series of fins (11c).

4. The plant of claim 1, **characterised in that** the overflow 10 is removable with respect to the hopper 9.

5. The plant of one of claims from 1 to 4, **characterised in that** the storage means (40) of the white slag comprise:
- a grid (92) positioned in proximity of the inlet mouth of the hopper (9), able to retain portions of white slag and possible metal residues having a grain size that is greater than a predetermined grain size;
- means for unloading to the outside from the hopper (9) of those portions of white slag and metal residues retained by the grid (92)

6. The plant of claim 5, **characterised in that** the grid (92) is positioned inclined in such a way as to facilitate unloading by gravity, towards the outside of the hopper (9), of the portions of white slag and metal residues resting on the grid (92).

7. The plant of claim 5 or 6, **characterised in that** the unloading means comprise an actuator able to activate rotation of the grid (92) in order to facilitate unloading towards the outside of the hopper (9) of the portions of white slag and metal residues resting on the grid (92).

8. The plant of one of claims from 5 to 7, **characterised in that** di comprises means (92a) for subjecting the grid (92) to a vibrational motion.

9. The plant of one of claims from 5 to 8, **characterised in that** the grid (92) comprises a space (920) containing a cooling fluid (F), so as to enable a first preliminary cooling of the white slag prior to inlet thereof into the first portion (21) of the rotating cylinder (2).

10. The plant of one of claims from 1 to 8, **characterised in that** the feeding means (7) of the white slag to the first portion (21) of the rotating cylinder (2) comprise a conveyor subjected to means for cooling which enable a second cooling of the white slag prior to inlet thereof into the first portion (21) of the rotating cylinder (2).

## Patentansprüche

1. Anlage zur Wiederverwertung von weißer Schlacke, die während eines Stahlerzeugungsschrittes erzeugt wird, umfassend:
- einen rotierenden Zylinder (2) der in seinem Inneren die weiße Schlacke in kontrollierter Atmosphäre enthält; wobei der rotierende Zylinder (2) einen ersten Abschnitt (21) umfasst, in dem eine geregelte Kühlung erfolgt, so dass ein Trocknungsprozess der weißen Schlacke herbeigeführt wird, mit der daraus folgenden Ablösung von Bruchstücken und Pulvern, und einen zweiten Abschnitt (22) umfasst, der in Kaskade zu dem ersten Abschnitt (21) angeordnet ist und in dem die Selektierung und Trennung der Bruchstücke und Pulver der weißen Schlacke erfolgt, deren Korngröße kleiner ist als eine vorgegebene Korngröße;
- erste Mittel (90, 19, 19a), die mit dem zweiten Abschnitt (22) des rotierenden Zylinders (2) verbunden sind, für das Austragen der Bruchstücke und Pulver der weißen Schlacke, deren Korngröße durchschnittlich kleiner ist als eine vorgegebene Korngröße;
- zweite Mittel (31), die in Kaskade zu dem zweiten Abschnitt (22) des rotierenden Zylinders (2) angeordnet sind, für das Austragen der Bruchstücke und Pulver der weißen Schlacke, deren Korngröße durchschnittlich größer ist als eine vorgegebene Korngröße;
- einen Zwischenraum (20), den der Mantel des ersten Abschnitts (21) des rotierenden Zylinders (2) aufweist;
- ein Kühlmedium (F), das im Inneren des Zwischenraums (20) enthalten ist und die indirekte Kühlung der im ersten Abschnitt (21) des rotierenden Zylinders (2) enthaltenen weißen Schlacke ermöglicht;
- Mittel zum Zuführen des Kühlmediums (F) in den Zwischenraum (20) in einem geschlossenen Kreislauf;
wobei die Anlage (1) **dadurch gekennzeichnet ist, dass** sie Folgendes umfasst:
Speichermittel (40) zum Speichern der weißen Schlacke; Zuführmittel (7) zum Zuführen der weißen Schlacke von den Speichermitteln zu dem ersten Abschnitt (21) des rotierenden Zylinders (2);
wobei die ersten Mittel (90, 19, 19a) und die zweiten Mittel (31) das Austragen der Bruchstücke und Pulver der weißen Schlacke in einem kontinuierlichen Zyklus unter Drehung des rotierenden Zylinders (2) ermöglicht,
und dadurch, dass die Speichermittel (40) für die weiße Schlacke Folgendes umfassen:
- einen Trichter (9), der an seinem Außenumfang einen Zwischenraum (93) aufweist, der ein Kühlmedium (F) enthält, um eine erste Kühlung der weißen Schlacke vor deren Einlass in den ersten Abschnitt (21) des rotierenden Zylinders (2) zu ermöglichen;
- einen Überlauf (10), der oberhalb des Trichters (9) frontal zum Zuführbereich der weißen Schlacke angeordnet ist und dazu dient, die weiße Schlacke von eventuell noch vorhandenem flüssigen Metall zu trennen;
wobei der Überlauf (10) auf seiner dem Trichter (9) zugewandten Seite einen Auffangkopf (10a) aufweist, der es ermöglicht, das flüssige Metall im Überlauf (10) zurückzuhalten und den Durchlauf der aufgrund der Differenz zwischen dem spezifischen Gewicht der beiden auf dem flüssigen Metall schwimmenden weißen Schlacke zu dem darunterliegenden Trichter (9) zu erleichtern.

2. Anlage nach Anspruch 1, **dadurch gekennzeichnet, dass** der Zwischenraum (20), den das Kühlmedium (F) durchströmt, einen Kanal (16) beinhaltet, der sich im Mantel des ersten Abschnitts (21) des rotierenden Zylinders (2) schraubenlinienförmig windet, um den indirekten Wärmeaustausch zwischen dem Kühlmedium (F) und der weißen Schlacke zu maximieren.

3. Anlage nach Anspruch 1 oder 2, **dadurch gekennzeichnet, dass** die Innenoberfläche des ersten Abschnitts (21) des rotierenden Zylinders (2) so geformt ist, dass sie ein Zahnprofil aufweist, das die Vergrößerung der Wärmeaustauschoberfläche zwischen dem Kühlmedium (F) und der weißen Schlacke ermöglicht, wobei das Zahnprofil eine Reihe von Rippen (11c) bildet.

4. Anlage nach Anspruch 1, **dadurch gekennzeichnet, dass** der Überlauf (10) vom Trichter (9) abgenommen werden kann.

5. Anlage nach einem der Ansprüche von 1 bis 4, **dadurch gekennzeichnet, dass** die Speichermittel (40) für die weiße Schlacke umfassen:
- einen Rost (92), der in der Nähe der Einlassöffnung des Trichters (9) angeordnet und geeignet ist, Teilstücke der weißen Schlacke und eventuelle Metallrückstände mit einer Korngröße zurückzuhalten, die größer ist als eine vorgegebene Korngröße;
- Mittel zum Austragen solcher vom Rost (92) zurückgehaltenen Teilstücke der weißen Schlacke und Metallrückstände aus dem Trichter (9).

6. Anlage nach Anspruch 5, **dadurch gekennzeichnet, dass** der Rost (92) schräg geneigt angeordnet ist, um den Austrag der auf dem Rost (92) liegenden Teilstücke der weißen Schlacke und Metallrückstände aus dem Trichter (9) mittels Schwerkraftwirkung zu erleichtern.

7. Anlage nach Anspruch 5 oder 6, **dadurch gekennzeichnet, dass** die Austragmittel einen Stellantrieb umfassen, der die Drehung des Rostes (92) antreiben kann, um den Austrag der auf dem Rost (92) liegenden Teilstücke der weißen Schlacke und Metallrückstände aus dem Trichter (9) zu erleichtern.

8. Anlage nach einem der Ansprüche von 5 bis 7, **dadurch gekennzeichnet, dass** sie Mittel (92a) umfasst, um den Rost (92) in eine Vibrationsbewegung zu versetzen.

9. Anlage nach einem der Ansprüche von 5 bis 8, **dadurch gekennzeichnet, dass** der Rost (92) einen Zwischenraum (920) beinhaltet, der ein Kühlmedium (F) enthält, um eine erste Vorkühlung der weißen Schlacke vor deren Einlass in den ersten Abschnitt (21) des rotierenden Zylinders (2) zu ermöglichen.

10. Anlage nach einem der Ansprüche von 1 bis 8, **dadurch gekennzeichnet, dass** die Zuführmittel (7) zum Zuführen der weißen Schlacke in den ersten Abschnitt (21) des rotierenden Zylinders (2) eine Fördereinrichtung umfassen, die der Wirkung von Kühleinrichtungen für eine zweite Kühlung der weißen Schlacke vor deren Einlass in den ersten Abschnitt (21) des rotierenden Zylinders (2) unterliegen.

## Revendications

1. Une installation pour le recyclage de scories blanches qui sont générées au cours d'une étape de production d'acier, comprenant :
- un cylindre rotatif (2) à l'intérieur duquel les scories blanches sont logées dans une atmosphère contrôlée ; le cylindre rotatif (2) comprenant une première portion (21) dans laquelle un refroidissement contrôlé est effectué de manière à mener à un processus de désintégration des scories blanches, avec un détachement conséquent de fragments et de poudres, et une deuxième portion (22), située en cascade par rapport à la première portion (21), dans laquelle a lieu la sélection et la séparation des fragments et poudres des scories blanches ayant une grosseur de grain inférieure à une grosseur de grain prédéfinie ;
- des premiers moyens (90, 19, 19a) associés à la deuxième portion (22) du cylindre rotatif (2), pour l'extraction des fragments et poudres des scories blanches ayant une grosseur de grain qui est en moyenne inférieure à une grosseur prédéfinie ;
- des deuxièmes moyens (31), situés en cascade par rapport à la deuxième portion (22) du cylindre rotatif (2), pour l'extraction des fragments et poudres des scories blanches ayant une grosseur de grain qui est en moyenne supérieure à une grosseur prédéfinie,
- un espace (20) présenté dans la chemise extérieure de la première portion (21) du cylindre rotatif (2) ;
- un fluide de refroidissement (F) contenu à l'intérieur de l'espace (20) pour permettre un refroidissement indirect des scories blanches contenues à l'intérieur de la première portion (21) du cylindre rotatif (2) ;
- des moyens pour alimenter le fluide de refroidissement (F) dans l'espace (20) en circuit fermé ;
l'installation (1) étant **caractérisée en ce qu'**elle comprend :
des moyens (40) de stockage des scories blanches ;
des moyens (7) d'alimentation des scories blanches des moyens de stockage à la première portion (21) du cylindre rotatif (2) ;
où les premiers moyens (90, 19, 19a) et les deuxièmes moyens (31) permettent l'extraction des fragments et poudres des scories blanches en un cycle continu avec la rotation du cylindre rotatif (2),
et **en ce que** les moyens (40) de stockage des scories blanches comprennent :
- une trémie (9) dotée périphériquement d'un espace (93) contenant un fluide de refroidissement (F), de manière à permettre un premier refroidissement des scories blanches avant l'entrée de celles-ci dans la première portion (21) du cylindre rotatif (2) ;
- un déversoir (10), positionné supérieurement à la trémie (9), frontalement à la zone de chargement des scories blanches, prévu pour séparer les scories blanches de tout métal liquide éventuellement encore présent ;
le déversoir (10) ayant, sur un côté de celui-ci qui fait face à la trémie (9), une tête-contenant (10a) qui permet de retenir le métal liquide dans le déversoir (10), et de faciliter le passage des scories blanches, qui flottent sur le métal liquide en raison de la différence de poids spécifique entre les deux, vers la trémie (9) sous-jacente.

2. L'installation selon la revendication 1, **caractérisée en ce que** l'espace (20) à travers lequel passe le fluide de refroidissement (F) comprend un canal (16) qui s'enroule en hélice dans la chemise extérieure de la première portion (21) du cylindre rotatif (2), de manière à maximiser l'échange thermique indirect entre le fluide de refroidissement (F) et les scories blanches.

3. L'installation selon la revendication 1 ou 2, **caractérisée en ce que** la surface intérieure de la première portion (21) du cylindre rotatif (2) a la forme d'un profil cranté qui permet d'augmenter la surface d'échange thermique entre le fluide de refroidissement (F) et les scories blanches, le profil cranté définissant une série d'ailettes (11c).

4. L'installation selon la revendication 1, **caractérisée en ce que** le déversoir (10) est amovible par rapport à la trémie (9).

5. L'installation selon l'une quelconque des revendications de 1 à 4, **caractérisée en ce que** les moyens (40) de stockage des scories blanches comprennent :
- une grille (92) positionnée à proximité de la bouche d'entrée de la trémie (9), destinée à retenir des portions de scories blanches et d'éventuels résidus métalliques ayant une grosseur de grain qui est supérieure à une grosseur de grain prédéfinie ;
- des moyens pour décharger à l'extérieur de la trémie (9) les portions de scories blanches et résidus métalliques retenus par la grille (92).

6. L'installation selon la revendication 5, **caractérisée en ce que** la grille (92) est positionnée inclinée de manière à favoriser un déchargement par gravité, vers l'extérieur de la trémie (9), des portions de scories blanches et résidus métalliques en appui sur la grille (92).

7. L'installation selon la revendication 5 ou 6, **caractérisée en ce que** les moyens de déchargement comprennent un actionneur destiné à mettre la grille (92) en rotation de manière à faciliter le déchargement vers l'extérieur de la trémie (9) des portions de scories blanches et résidus métalliques en appui sur la grille (92).

8. L'installation selon l'une des revendications de 5 à 7, **caractérisée en ce qu'**elle comprend des moyens (92a) destinés à soumettre la grille (92) à un mouvement vibratoire.

9. L'installation selon une des revendications de 5 à 8, **caractérisée en ce que** la grille (92) comprend un espace (920) contenant un fluide de refroidissement (F), de manière à permettre un premier refroidissement préliminaire des scories blanches avant l'entrée de celles-ci dans la première portion (21) du cylindre rotatif (2).

10. L'installation selon une des revendications de 1 à 8, **caractérisée en ce que** les moyens (7) d'alimentation des scories blanches à la première portion (21) du cylindre rotatif (2) comprennent un transporteur soumis à des moyens de refroidissement qui permettent un deuxième refroidissement des scories blanches avant l'entrée de celles-ci dans la première portion (21) du cylindre rotatif (2).
